# EUROPÄISCHE PATENTANMELDUNG

(11) **EP 1 157 822 A1**
(43) Veröffentlichungstag der Anmeldung: **28.11.2001**
(21) Anmeldenummer: 01109272.3
(22) Anmeldetag: 14.04.2001
(51) Int. Cl.: B32B 27/08, F16L 33/00, F16L 47/00

(54) **Mehrschichtiges, verstärktes Kunststoffanbindungselement mit antistatischen Eigenschaften**

(30) Priorität: 26.05.2000 DE 10025707
(71) Anmelder: DEGUSSA AG, 40474 Düsseldorf (DE)
(72) Erfinder: Schmitz, Guido, Dr., 48249 Dülmen (DE)

(57) **Zusammenfassung**

Ein Anbindungselement mit einem durchgehenden leitenden Pfad von der inneren zur äußeren Oberfläche enthält folgende Komponenten:
A. Eine Hautschicht aus einer elektrisch leitfähigen Kunststoffformmasse A sowie
B. einen Kern aus einer Kunststoffformmasse B, die von A verschieden ist.

Das Anbindungselement dient in einem Kraftstoffleitungssystem zur Verbindung zwischen Kunststoffrohren und anderen Aggregaten.

## Beschreibung

Gegenstand der vorliegenden Erfindung ist ein Anbindungselement in einem Kraftstoffleitungssystem, ein so genannter Quick Connector, insbesondere für den Einsatz in einem Automobil. Quickconnectoren bzw. Anbindungselemente im Sinne der Erfindung sind spritzgegossene Verbindungselemente zwischen Kunststoffrohren (insbesondere von Kraftstoffleitungen) und anderen Aggregaten (z.B. Einspritzleiste, Metallrohre, Kraftstofffilter, andere Kunststoffrohre und ähnliches). Als Spezifikation für Quickconnectoren sei auf die SAE J2044 verwiesen.

In Kraftstoffleitungssystemen für Fahrzeuge mit Verbrennungsmotor tritt durch den fließenden Kraftstoff eine hohe elektrostatische Aufladung auf. Diese kann sich schlagartig entladen und Löcher in der Wand erzeugen, durch die der Kraftstoff ins Freie fließen kann. Durch Kontakt mit heißen Teilen im Motorraum oder der Auspuffanlage kann der Kraftstoff sich entzünden und zu einem Fahrzeugbrand führen.

Zur Vermeidung dieses Problems ist es erforderlich, die Systemkomponenten und damit auch das Anbindungselement leitfähig auszurüsten und zum einen eine leitende Verbindung zwischen den einzelnen Systemkomponenten zu ermöglichen und zum anderen letztendlich eine leitende Verbindung zwischen Fahrzeugchassis und den Komponenten des Kraftstoffleitungssystems zu erzielen. Hierdurch werden das Fahrzeugchassis und die Komponenten des Leitungssystems auf gleiches Potential gebracht und somit ein Ladungsaufbau verhindert.

In der JP-A 207154/95 wird vorgeschlagen, Anbindungselemente in Kraftstoffleitungssystemen aus einer Formmasse auf Basis von PA 11 oder PA 12 herzustellen, die 5 bis 20 Gew.-% Kohlenstofffasern und 5 bis 25 Gew.-% Glasfasern enthält. Wegen des hohen Fasergehalts weisen derartige Formmassen jedoch eine schlechte Fließfähigkeit auf, was die Herstellung kleinvolumiger Spritzgussartikel erheblich erschwert. Diese Schwierigkeiten werden noch dadurch verstärkt, dass Quickconnectoren in der Regel in Mehrfachkavitätenwerkzeugen hergestellt werden. Aufgrund der verlängerten Fließwege wird hierbei der Forderung nach einer guten Fließfähigkeit der Formmasse zusätzlich Nachdruck verliehen.

Die nahe liegende Überlegung, in den Formmassen der JP-A 207154/95 die Kohlenstofffasern durch Leitfähigkeitsruß zu ersetzen, führt nicht weiter. Zum einen verzichtet man hierbei auf einen Teil der Verstärkung, zum anderen wird im Allgemeinen bei den benötigten Rußmengen eine Erhöhung der Schmelzeviskosität erhalten, was sich wiederum negativ auf das Füllen der Kavität beim Spritzgießen auswirkt. Darüber hinaus muss man bei der Schlagzähigkeit Einbußen hinnehmen.

Es bestand daher die Aufgabe, Kunststoffanbindungselemente herzustellen, die leitfähig ausgerüstet sind und die sich leicht durch Spritzgießen herstellen lassen, wobei Einzelheiten der Oberfläche wie z.B. Dorne, Gehäuse, Nuten für O-Ringe usw. werkzeuggetreu abgebildet werden können. Gleichzeitig sollte trotzdem eine ausreichende Faserverstärkung des Anbindungselements möglich sein, um die gewünschte Steifigkeit zu erzielen.

Diese Aufgabe wurde gelöst durch ein Anbindungselement mit einem durchgehenden leitfähigen Pfad von der inneren zur äußeren Oberfläche, das folgende Komponenten enthält:
A. Eine Hautschicht aus einer elektrisch leitfähigen Kunststoffformmasse A sowie
B. einen Kern aus einer Kunststoffformmasse B, die von A verschieden ist.

Ein ähnlicher Schichtenaufbau wird in der EP-A-0 745 763 für ein Kunststoff-Kraftstofffilter beschrieben. Dort handelt es sich aber nicht um verstärkte Formmassen und auch nicht um das Problem, feine Außenkonturen werkzeuggetreu abzubilden.

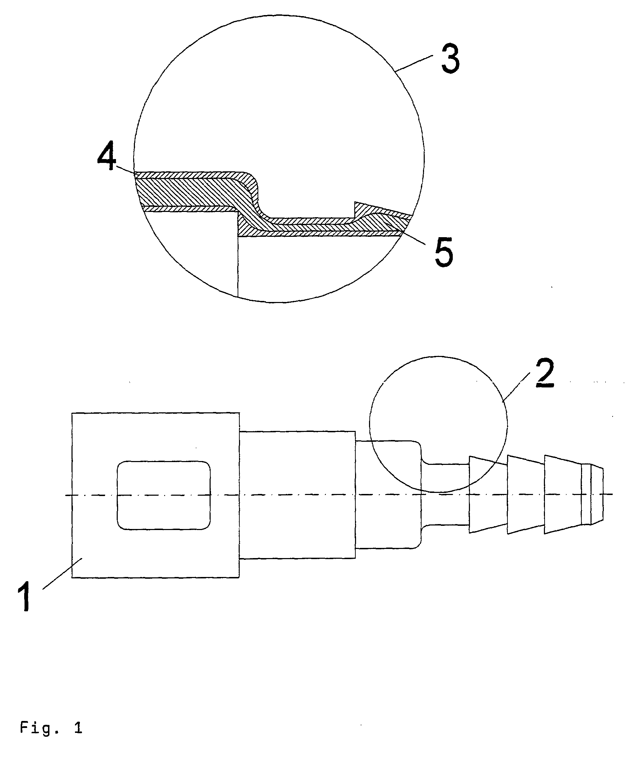

Fig. 1 zeigt eine beispielhafte Ausführungsform des erfindungsgemäßen Anbindungselements **(1)** in der Seitenansicht. Der Ausschnitt **(2)** des Wandquerschnitts ist oben vergrößert wiedergegeben **(3)**. Die gezeigte Ausführungsform ist aus zwei Materialien aufgebaut, und zwar aus einer Hautschicht **(4)** und einem Kern **(5)**, der von der Hautschicht weitgehend umschlossen ist.

Im Rahmen der Erfindung ist es bevorzugt, dass die Formmasse A im wesentlichen frei von Glasfasern ist. Im Sonderfällen enthält sie maximal etwa 15 Gew.-% hiervon, bevorzugt maximal 10 Gew.-% und besonders bevorzugt maximal 5 Gew.-%. Insbesondere bevorzugt enthält sie jedoch keine Glasfasern.

Die Formmasse B kann zum einen auf dem gleichen Grundpolymer wie die Formmasse A basieren. Jedoch kann die Formmasse B auch auf einem anderen Grundpolymeren als die Formmasse A basieren. Vorzugsweise sollten hierbei Polymerkombinationen aus miteinander verträglichen oder mit Verträglichkeitsvermittlern modifizierten Formmassen verwendet werden. Hierbei können verschiedene Zielrichtungen verfolgt werden:
a) Verbilligung der Polymerbasis. In diesem Fall besteht die Komponente B aus einer preiswerteren Formmasse als die Komponente A.
b) Erhöhung der Sperrwirkung gegenüber dem Kraftstoff oder einzelnen Kraftstoffkomponenten. Hier können die gleichen Materialkombinationen wie bei entsprechenden Mehrschichtrohren verwendet werden. An dieser Stelle soll auf die Offenbarung folgender Schriften ausdrücklich Bezug genommen werden:
   DE-OSS bzw. -PSS 40 01 125, 40 06 870, 41 12 662, 41 12 668, 41 37 430, 41 37 431, 41 37 434, 42 07 125, 42 14 383, 42 15 608, 42 15 609, 42 40 658, 43 02 628, 43 10 884, 43 26 130, 43 36 289, 43 36 290, 43 36 291, die nicht vorveröffentlichten deutschen Patentanmeldungen P 44 10 148.1 und 195 07 025.9 sowie WO-A-93/21466, WO-A-94/18 485, EP-A-0 198 728 und EP-A-0 558 373.
c) Versteifung des Anbindungselements mittels einer hochfasergefüllten Formmasse als Material für die Komponente B.

Die Komponente A besteht bevorzugt aus einer Polyamid-Formmasse. Weitere geeignete Werkstoffe sind beispielsweise Formmassen aus thermoplastischen Polyestern oder Polyolefinen. Als Komponente B geeignet sind beispielsweise Formmassen auf Basis von Polyamid, Polyolefinen, thermoplastischen Polyestern, Fluorpolymeren, Polyoxymethylen oder EVOH. Hier kann als Polyamid beispielsweise ein Typ auf Basis von m- oder p-Xylylidendiamin (z. B. PA MXD6) verwendet werden.

Als Polyamid kommen darüber hinaus in erster Linie aliphatische Homo- und Copolyamide in Frage. Als Beispiel seien die 4.6-, 6.6-, 6.12-, 8.10-, 10.10-Polyamide o. Ä.. genannt. Bevorzugt werden 6-, 10.12-, 11-, 12- sowie 12.12-Polyamide. [Die Kennzeichnung der Polyamide entspricht internationaler Norm, wobei die erste (n) Ziffer(n) die C-Atomzahl des Ausgangsdiamins und die letzte (n) Ziffer(n) die C-Atomzahl der Dicarbonsäure angeben. Wird nur eine Zahl genannt, so bedeutet dies, dass von einer α,ω-Aminocarbonsäure bzw. von dem davon abgeleiteten Lactam ausgegangen worden ist - H. Domininghaus, Die Kunststoffe und ihre Eigenschaften, Seite 272, VDI-Verlag (1976).]

Sofern Copolyamide verwendet werden, können diese z. B. Adipinsäure, Sebacinsäure, Korksäure, Isophthalsäure oder Terephthalsäure als Cosäure bzw. Bis(4-aminocyclohexyl)methan, Trimethylhexamethylendiamin, Hexamethylendiamin o. Ä.. als Codiamin enthalten.

Die Herstellung dieser Polyamide ist bekannt (z.B.: D. B. Jacobs, J. Zimmermann, Polymerization Processes, S. 424- 467; Interscience Publishers, New York (1977); DE-AS 21 52 194).

Ebenfalls geeignet als Polyamide sind gemischt aliphatisch/aromatische Polykondensate, wie sie z.B. in den US-PSS 2 071 250, 2 071 251, 2 130 523, 2 130 948, 2 241 322, 2 312 966, 2 512 606, 3 393 210 bzw. in Kirk-Othmer; Encyclopedia of Chemical Technology, 3. Aufl., Vol. 18, Wiley & Sons (1982), S. 328 und 435, beschrieben werden. Weitere als Polyamide geeignete Polykondensate sind Poly(etheresteramide) bzw. Poly(etheramide). Derartige Produkte werden z.B. in den DE-OSS 27 12 987, 25 23 991 und 30 06 961 beschrieben.

Das Molekulargewicht (Zahlenmittel) der Polyamide liegt oberhalb von 4 000, vorzugsweise oberhalb von 10 000. Bevorzugt liegt hierbei die relative Viskosität (ηᵣₑₗ) im Bereich von 1,65 bis 2,4.

Die Polyamide können bis zu 40 Gew.-% andere Thermoplaste enthalten, sofern diese die erfindungsgemäßen Eigenschaften nicht stören. Insbesondere seien hier Polycarbonat [H. Schnell, Chemistry and Physics of Polycarbonates, Interscience Publishers, New York (1981)], Acrylnitril/Styrol/Butadien- [Houben-Weyl, Methoden der organischen Chemie, Bd. 14/1, Georg Thieme Verlag Stuttgart, S. 393- 406; Ullmanns Encyclopädie der technischen Chemie, 4. Auflage, Bd. 19, Verlag Chemie Weinheim (1981), S. 279 - 284], Acrylnitril/Styrol/Acrylat-[Ullmanns Encyclopädie der technischen Chemie, 4. Auflage, Bd. 19, Verlag Chemie Weinheim (1981), S. 277 - 295], Acrylnitril/Styrol-Copolymerisate [Ullmanns Encyclopädie der technischen Chemie, 4. Auflage, Bd. 19, Verlag Chemie Weinheim (1981), S. 273 ff.] oder Polyphenylenether (DE-OSS 32 24 691 und 32 24 692, US-PSS 3 306 874, 3 306 875 und 4 028 341) genannt.

Sofern erforderlich, können die Polyamide schlagzäh eingestellt werden. Geeignete Modifier sind z.B. Ethylen/Propylen- oder Ethylen/Propylen/Dien-Copolymere (EP-A-0 295 076), Polypentenylen, Polyoctenylen oder statistische bzw. blockartig aufgebaute Copolymere aus alkenylaromatischen Verbindungen mit aliphatischen Olefinen oder Dienen (EP-A-0 261 748). Weiterhin können als schlagzähmachende Kautschuke Kern/Schale-Kautschuke mit einem zähelastischen Kern aus (Meth)Acrylat-, Butadien- oder Styrol/Butadien-Kautschuk mit Glastemperatur T_{g} < -10 °C verwendet werden, wobei der Kern vernetzt sein kann. Die Schale kann aus Styrol und/oder Methylmethacrylat und/oder weiteren ungesättigten Monomeren aufgebaut sein (DE-OSS 21 44 528, 37 28 685). Der Anteil an schlagzähmachender Komponente ist so zu wählen, dass die gewünschten Eigenschaften nicht verschlechtert werden.

Die genannten Polyamide werden für sich oder in Gemischen eingesetzt.

Als Polyolefin kommen Homopolymere und Copolymere von α-Olefinen mit 2 bis 12 C-Atomen in Frage, beispielsweise von Ethylen, Propen, 1-Buten, 1-Hexen oder 1-Octen.

Weiterhin geeignet sind Copolymere und Terpolymere, die zusätzlich zu diesen Monomeren weitere Monomere, insbesondere Diene, enthalten, wie beispielsweise Ethylidennorbornen, Cyclopentadien oder Butadien.

Bevorzugte Polyolefine sind Polyethylen und Polypropylen. Grundsätzlich kann hiervon jeder handelsübliche Typ eingesetzt werden. So kommen beispielsweise in Frage: lineares Polyethylen hoher, mittlerer oder niedriger Dichte, LDPE, Ethylencopolymere mit kleineren Mengen (bis maximal ca. 40 Gew.-%) an Comonomeren wie n-Butylacrylat, Methylmethacrylat, Maleinsäureanhydrid, Styrol, Vinylalkohol, Acrylsäure, Glycidylmethacrylat o. Ä.., isotaktisches oder ataktisches Homopolypropylen, Randomcopolymere von Propen mit Ethen und/oder 1-Buten, Ethylen-Propylen-Blockcopolymere und dergleichen mehr. Derartige Polyolefine können auch eine Schlagzähkomponente wie z.B. EPM- oder EPDM-Kautschuk oder SEBS enthalten. Darüber hinaus können sie auch, dem Stand der Technik entsprechend, fünktionelle Monomere wie Maleinsäureanhydrid, Acrylsäure oder Vinyltrimethoxysilan aufgepfropft enthalten.

Die thermoplastischen Polyester weisen nachstehende Grundstruktur auf: 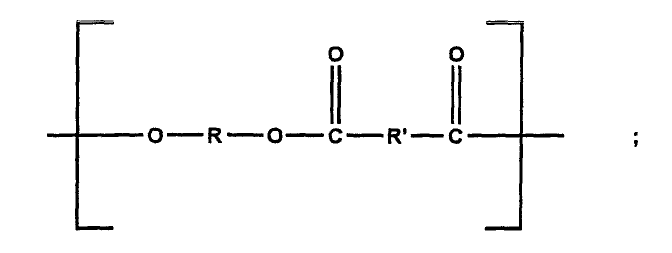 dabei stellt R einen divalenten verzweigten oder nichtverzweigten aliphatischen und/oder cycloaliphatischen Rest mit 2 bis 12, vorzugsweise 2 bis 8 C-Atomen, in der Kohlenstoffkette und R' einen divalenten aromatischen Rest mit 6 bis 20, vorzugsweise 8 bis 12, C-Atomen im Kohlenstoffgerüst dar.

Als Beispiele für die bei der Herstellung einzusetzenden Diole seien Ethylenglykol, Trimethylenglykol, Tetramethylenglykol, Hexamethylenglykol, Neopentylglykol, Cyclohexandimethanol o. Ä.. genannt.

Bis zu 25 Mol-% des genannten Diols können durch ein Diol mit nachstehender allgemeiner Formel 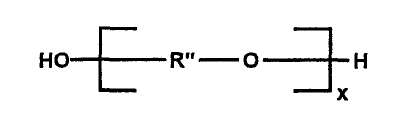 ersetzt sein, wobei R" einen zweiwertigen Rest mit 2 bis 4 C-Atomen bedeutet und x einen Wert von 2 bis 50 annehmen kann.

Bevorzugt als Diole werden Ethylenglykol und Tetramethylenglykol eingesetzt.

Als bei der Herstellung einzusetzende aromatische Dicarbonsäure kommen z.B. Terephthalsäure, Isophthalsaure, 1.4-, 1.5-, 2.6- bzw. 2.7-Naphthalindicarbonsäure, Diphensäure, Diphenylether-4.4'-dicarbonsäure oder deren polyesterbildende Derivate, wie z.B. Dimethylester, in Frage.

Bis zu 20 Mol-% dieser Dicarbonsäuren können durch aliphatische Dicarbonsäuren, wie z.B. Bernsteinsäure, Maleinsäure, Fumarsäure, Sebacinsäure, Dodecandisäure u. a. ersetzt sein.

Die Herstellung der thermoplastischen Polyester gehört zum Stand der Technik (DE-OSS 24 07 155, 24 07 156; Ullmanns Encyclopädie der technischen Chemie, 4. Auflage, Band 19, Seite 65 ff., Verlag Chemie GmbH, Weinheim 1980).

Die erfindungsgemäß eingesetzten Polyester weisen eine Viskositätszahl (J-Wert) im Bereich von 80 bis 240 cm³/g auf.

Bevorzugte thermoplastische Polyester sind Polyethylenterephthalat, Polybutylenterephthalat, Polyethylen-2,6-naphthalat und Polybutylen-2,6-naphthalat.

Sofern erforderlich, können die Polyester schlagzäh eingestellt werden.

Als Fluorpolymere sind beispielsweise Ethylen-Tetrafluorethylen-Copolymere (ETFE; z.B. Tefzel 200 von DuPont oder Hostaflon ET 6235 von Hoechst), Tetrafluorethylen-Hexafluorpropen-Vinylidenfluorid-Terpolymere (THV; z.B. THV 500 von Dyneon), Ethylen-Chlortrifluorethylen-Copolymere (ECTFE; z.B. Halar von Ausimont) oder Polyvinylidenfluorid (PVDF) geeignet.

ETFE, THV und ECTFE sind beispielsweise in H. Domininghaus, Die Kunststoffe und ihre Eigenschaften, 4. Auflage, Kapitel 2.1.7 (Fluor-Kunststoffe) beschrieben.

Herstellung und Struktur von Polyvinylidenfluorid sind ebenfalls bekannt (Hans R. Kricheldorf, Handbook of Polymer Synthesis, Part A, Verlag Marcel Dekker Inc. New York - Basel-Hongkong, S. 191 f.: Kunststoff-Handbuch, 1. Band XI, Carl Hanser Verlag München (1971), S. 403 ff.).

Es können erfindungsgemäß auch Polymere auf Basis von Polyvinylidenfluorid enthalten sein, die bis zu 40 Gew.-% andere Monomere aufweisen. Als solche zusätzlichen Monomeren seien beispielsweise genannt: Trifluorethylen, Ethylen, Propen und Hexafluorpropen.

Das erfindungsgemäß eingesetzte Polyvinylidenfluorid weist in der Regel einen Melt Flow-Index von < 17 g/10 min., vorzugsweise von 2 bis 13 g/10 min. (DIN 53 735) auf, gemessen bei 230 °C und unter einer Belastung von 5 kg.

Beispielsweise können folgende Materialkombinationen verwendet werden:
A = Formmasse auf Basis von Polyamid, insbesondere PA 6, PA 66, PA 612, PA 11 oder PA 12
B = gemäß dem oben genannten Stand der Technik modifiziertes PVDF, anderes Fluorpolymer, Polybutylenterephthalat oder Polybutylennaphthalat, EVOH oder ein mit A kompatibles Polyamid, beispielsweise ein Typ auf Basis von m- oder p-Xylylidendiamin und Adipinsäure.

Die genannten Polymere werden für sich oder in Gemischen eingesetzt. Die Formmassen können auch ― abgesehen von den oben genannten Schlagzähkomponenten ― die üblichen Zusätze enthalten wie etwa Verarbeitungshilfsmittel, Entformungshilfsmittel, Stabilisatoren, Flammschutzmittel oder mineralische Füllstoffe wie z.B. Glimmer oder Kaolin.

Die Formmasse A wird durch Compoundieren des Grundpolymers mit einem elektrisch leitfähigen Zusatz leitfähig ausgerüstet. Dies kann nach allen Methoden des Standes der Technik geschehen. Als leitfähiger Zusatz können beispielsweise Leitruß, Metallflitter, Metallpulver, metallisierte Glaskugeln, Metallfasern (beispielsweise aus rostfreiem Stahl), metallisierte Whiskers, Kohlefasern (auch metallisiert), intrinsisch leitfähige Polymere oder besonders vorteilhaft Graphitfibrillen verwendet werden. Es können auch Mischungen verschiedener leitfähiger Zusätze eingesetzt werden. Hierbei sollte der Oberflächenwiderstand so niedrig eingestellt werden, dass elektrische Ladungen sicher abgeleitet werden können.

Graphit-Fibrillen werden beispielsweise in Plastics World, November 1993, Seite 10 f. beschrieben. Es handelt sich um winzige Fasern aus kristallinem Graphit mit mittleren Durchmessern von maximal etwa 700 nm. Beim derzeit kommerziell erhältlichen Material liegt ihr durchschnittlicher Durchmesser in der Größenordnung um 0,01 micron mit einem L/D-Verhältnis in der Größenordnung um 500 : 1 bis 1 000 : 1. Grundsätzlich geeignet für den Zweck der vorliegenden Erfindung sind auch Graphitfibrillen, wie sie in den WO-Anmeldungen Nr. 8603455, 8707559, 8907163, 9007023 und 9014221 sowie in JP-A-03287821 beschrieben sind.

Der Gehalt an Graphitfibrillen in der Formmasse beträgt in der Regel 1 bis 30 Gew.-%, vorzugsweise 1,5 bis 10 Gew.-% und besonders bevorzugt 2 bis 7 Gew.-%.

In einer weiteren bevorzugten Ausführungsform enthält die Formmasse A 3 bis 30 Gew.-%, bevorzugt 10 bis 25 Gew.-% und besonders bevorzugt 16 bis 20 Gew.-% eines Leitrußes, welcher durch folgende Eigenschaften gekennzeichnet ist:
a) Dibutylphthalat(DBP)-Absorption gemäß ASTM D2414 von 100 - 300 ml/100 g, bevorzugt 140 - 270 ml/100 g;
b) Spezifische Oberfläche, gemessen über Stickstoffabsorption gemäß ASTM D3037, von 30 - 180 m²/g, bevorzugt 40 - 140 m²/g;
c) Aschegehalt gemäß ASTM D1506 niedriger als 0,1 Gew.-%, bevorzugt niedriger als 0,06 Gew.-%, besonders bevorzugt niedriger als 0,04 Gew.-%;
d) Gritanteil von maximal 25 ppm, bevorzugt maximal 15 ppm und besonders bevorzugt maximal 10 ppm.

Unter Grit versteht man hierbei harte koksähnliche Partikel, die im Herstellungsprozess durch Vercrackungsreaktionen entstehen.

Dieser Leitruß ist ein Spezialtyp, der sich von den üblichen Leitrußen in den anspruchsgemäßen Parametern unterscheidet. Ein typischer handelsüblicher EC-Ruß (_{"}extraconductive black") weist beispielsweise eine DBP-Absorption von 350 ml/100 g, eine spezifische N₂-Oberfläche von 1000 m²/g und einen Aschegehalt von 0,7 Gew.-% auf. Die mit diesem Spezialtyp ausgerüsteten Formmassen weisen eine verbesserte Wärmealterungsbeständigkeit sowie eine hohe Beständigkeit gegenüber peroxidhaltigen Kraftstoffen auf. Der Grund hierfür ist unbekannt. Es ist aber zu vermuten, dass das unterschiedliche Verhalten mit den Unterschieden in der Oberflächenstruktur und dadurch bedingter unterschiedlicher katalytischer Aktivität zusammenhängt und dass darüber hinaus der Aschegehalt des Rußes ebenfalls katalytische Wirkung besitzt.

Die Ruße können beispielsweise nach dem MMM-Verfahren erhalten werden. Das MMM-Verfahren basiert auf der partiellen Verbrennung von Öl (N. Probst, H. Smet, Kautschuk Gummi Kunststoffe, 7 - 8/95, S. 509- 511; N. Probst, H. Smet, GAK 11/96 (Jahrgang 49), S. 900- 905); entsprechende Produkte sind im Handel erhältlich.

In einer weiteren bevorzugten Ausführungsform enthält die Formmasse A zusätzlich zum Leitruß 0,1 bis 20 Gew.-% Kohlenstofffasern, bezogen auf das Gesamtgewicht, wobei aber ein Gehalt von maximal 16 Gew.-% und insbesondere von maximal 12 Gew.-% in der Regel ausreicht. Da die Kohlenstofffasern selbst zur elektrischen Leitfähigkeit beitragen, kann in diesem Falle eine Rußmenge von vorzugsweise 5 bis 18 Gew.-% verwendet werden.

Kohlenstofffasern sind kommerziell erhältlich; sie sind beispielsweise im Römpp Chemie Lexikon, 9. Auflage, S. 2289 f., Thieme, Stuttgart, 1993 sowie in der dort genannten Literatur beschrieben.

In einer bevorzugten Ausführungsform ist die Formmasse B faserverstärkt. Geeeignete Fasern wie beispielsweise Glasfasern, Kohlenstoffasern, Aramidfasern, Mineralfasern oder Whiskers sowie entsprechende Formmassen sind Stand der Technik. Die Obergrenze des Fasergehalts ist alleine dadurch festgelegt, dass die faserverstärkte Formmasse noch ausreichend fließfähig sein muß.

Unabhängig davon kann die Formmasse B auch die üblichen Füllstoffe enthalten, wie z. B. Mikroglaskugeln, Kaolin, Wollastonit, Talkum, Glimmer oder Calciumcarbonat.

Falls nötig, können die Komponenten A und B mit Hilfe eines dazwischenliegenden Haftvermittlers verbunden werden. Derartige Haftvermittler sind Stand der Technik.

Die Dicke der Hautschicht und des Kerns hängt sehr stark von der Rheologie der Formmassen, der Geometrie des Quickconnectors und natürlich den Prozeßparametern ab. Die Hautschicht soll mindestens so dick sein, dass der Kern damit zumindest größtenteils und bevorzugt möglichst vollständig umhüllt ist.

Die erfindungsgemäßen Anbindungselemente können mittels Mehrkomponentenspritzguss oder im Monosandwich-Verfahren hergestellt werden.

Die Herstellung von Kunststoffartikeln im Mehrkomponentenspritzguss ist Stand der Technik (siehe z.B. Th. Zipp, Fließverhalten beim 2-Komponenten-Spritzgießen, Dissertation, RWTH Aachen, 1992). Beim Einsatz zweier Komponenten A und B wird zunächst die leitfähige Komponente A vorgelegt und die nicht leitfähige Komponente B nachgespritzt. Bei einem derartigen Vorgehen entsteht, wenn man einen Schnitt durch die Wandung betrachtet, die Schichtenfolge A/B/A, wobei zu Anfang und Ende des Fließweges jedoch die leitfähige Schicht A geschlossen ist, da nur der Kernbereich durch die Komponente B gefüllt wird. Somit ist die durchgängige Übertragung der Ladungen von innen nach außen gesichert.

Auch das Monosandwichverfahren ist Stand der Technik; siehe hierzu beispielsweise C. Jaroschke, Neue Wege beim Sandwich-Spritzgießen, Kunststoffe 83 (1993) 7, S. 519- 521.

Durch die erfindungsgemäße Konstruktion ist gewährleistet, dass bei den Teilen auch dann, wenn sie eine sehr hohe Steifigkeit besitzen, d.h. wenn der Kern aus einer hochgefüllten Formmasse besteht, trotzdem alle Oberflächenkonturen wie Dorne usw. voll ausgebildet sind. Darüber hinaus erzielt man, insbesondere bei Verwendung teurer Leitfähigkeitsadditive, eine beträchtliche Materialersparnis.

## Patentansprüche

1. Anbindungselement mit einem durchgehenden leitfähigen Pfad von der inneren zur äußeren Oberfläche, das folgende Komponenten enthält:
A. Eine Hautschicht aus einer elektrisch leitfähigen Kunststoffformmasse A sowie
B. einen Kern aus einer Kunststoffformmasse B, die von A verschieden ist.

2. Anbindungselement gemäß Anspruch 1,
**dadurch gekennzeichnet,**
**dass** die Formmasse A im wesentlichen frei von Glasfasern ist.

3. Anbindungselement gemäß einem der Ansprüche 1 und 2,
**dadurch gekennzeichnet,**
**dass** die Formmasse B faserverstärkt ist.

4. Anbindungselement gemäß Anspruch 3,
**dadurch gekennzeichnet,**
**dass** die Formmasse B Glasfasern, Kohlenstoffasern, Aramidfasern, Mineralfasern oder Whiskers enthält.

5. Anbindungselement gemäß einem der vorhergehenden Ansprüche,
**dadurch gekennzeichnet,**
**dass** die Formmasse B auf dem gleichen Grundpolymer basiert wie die Formmasse A.

6. Anbindungselement gemäß einem der Ansprüche 1 bis 4,
**dadurch gekennzeichnet,**
**dass** die Formmasse B auf einem anderen Grundpolymer als die Formmasse A basiert.

7. Anbindungselement gemäß einem der Ansprüche 1 bis 4,
**dadurch gekennzeichnet,**
**dass** die Formmasse B eine Sperrwirkung gegenüber dem Kraftstoff oder einzelnen Kraftstoffkomponenten besitzt.

8. Anbindungselement gemäß einem der vorhergehenden Ansprüche,
**dadurch gekennzeichnet,**
**dass** die Komponente A aus einer Formmasse besteht, deren Grundpolymer ausgewählt ist aus Polyamiden, thermoplastischen Polyestern und Polyolefinen und die Komponente B aus einer Formmasse besteht, deren Grundpolymer ausgewählt ist aus Polyamiden, Polyolefinen, thermoplastischen Polyestern, Fluorpolymeren, Polyoxymethylen und EVOH.

9. Anbindungselement gemäß einem der vorhergehenden Ansprüche,
**dadurch gekennzeichnet,**
**dass** die Formmasse A einen elektrisch leitfähigen Zusatz enthält, der ausgewählt ist aus Leitruß, Metallflittern, Metallpulver, metallisierten Glaskugeln, Metallfasern, metallisierten Whiskern, Kohlenstofffasern, metallisierten Kohlenstofffasern, intrinsisch leitfähigen Polymeren und Graphitfibrillen.

10. Anbindungselement gemäß Anspruch 9,
**dadurch gekennzeichnet,**
**dass** die Formmasse A zu 3 bis 30 Gew.-% einen Leitruß enthält, der durch folgende Parameter charakterisiert ist:
a) DBP-Absorption von 100 bis 300 ml/100 g;
b) Spezifische Oberfläche von 30 bis 180 m²/g;
c) Aschegehalt von weniger als 0,1 Gew.-% und
d) Gritanteil von maximal 25 ppm.

11. Anbindungselement gemäß einem der Ansprüche 9 und 10,
**dadurch gekennzeichnet,**
**dass** die Formmasse A zusätzlich zum Leitruß 0,1 bis 20 Gew.-% Kohlenstofffasern enthält.

12. Anbindungselement gemäß Anspruch 11,
**dadurch gekennzeichnet,**
**dass** der Gehalt an Leitruß 5 bis 18 Gew.-% beträgt.

13. Anbindungselement gemäß einem der vorhergehenden Ansprüche,
**dadurch gekennzeichnet,**
**dass** die Komponenten A und B mit Hilfe eines dazwischenliegenden Haftvermittlers verbunden sind.

14. Anbindungselement gemäß einem der vorhergehenden Ansprüche,
**dadurch gekennzeichnet,**
**dass** sie durch Mehrkomponentenspritzgießen oder im Monosandwich-Verfahren hergestellt sind.

15. Verwendung des Anbindungselements gemäß einem der vorhergehenden Ansprüche in einem Kraftstoffleitungssystem.

16. Kraftstoffleitungssystem, das ein Anbindungselement gemäß einem der Ansprüche 1 bis 14 enthält.
